# EUROPÄISCHE PATENTSCHRIFT

(11) **EP 4 473 838 B1**
(45) Veröffentlichungstag und Bekanntmachung des Hinweises auf die Patenterteilung: **05.08.2026**
(21) Anmeldenummer: 24208282.4
(22) Anmeldetag: 10.05.2023
(51) Int. Cl.: A21B 5/02

(54) **BACKPLATTE FÜR EINE BACKPLATTENVORRICHTUNG EINES BACKOFENS**
BAKING PLATE FOR A BAKING PLATE DEVICE OF AN OVEN
PLAQUE DE CUISSON POUR UNE UNITÉ DE CUISSON D'UN FOUR

(30) Priorität: 11.05.2022 EP 22172751
(43) Veröffentlichungstag der Anmeldung: 11.12.2024
(62) Teilanmeldung aus: 23726902.2
(73) Patentinhaber: Bühler Food Equipment GmbH, 2100 Leobendorf (AT)
(72) Erfinder: Bauer, Herbert, 2102 Hagenbrunn (AT); Figoni, Martino, 1200 Wien (AT); Steinböck, Michael, 3042 Holzleiten (AT)
(74) Vertreter: Puchberger & Partner Patentanwälte

(56) Entgegenhaltungen:
- WO-A1-2012/152778
- WO-A2-2009/100873
- DE-A1- 19 707 730
- DE-A1- 3 233 519
- US-A1- 2009 200 291

## Beschreibung

Die Erfindung betrifft eine Backplatte gemäß den Merkmalen des Patentanspruchs 1. Bevorzugte Ausführungsformen sind in den abhängigen Ansprüchen definiert.

Zur industriellen Herstellung von Waffelprodukten ist es bekannt, einen im Wesentlichen flüssigen Waffelteig, der im unausgebackenen Zustand etwa 45-70% Wasser enthält, in eine geöffnete Backform einzubringen, wobei die Backform als Backzange ausgebildet ist. In weiterer Folge wird die Backzange nach dem Einbringen der Backmasse geschlossen und durch einen beheizten Backraum befördert. Durch das Erhitzen der Backform und damit auch der Backmasse verdampfen deren flüchtige Bestandteile. Dabei entsteht in der Backzange ein erhöhter Druck, dessen Kräfte auf die Backplatten der Backzange wirken.

In der Patentanmeldung WO 2012152778 A1 ist ein Backofen mit einer im Backofen umlaufenden, endlosen Backzangenkette offenbart, dessen Backzangen und insbesondere dessen Backplatten induktiv beheizbar sind und Spannvorrichtungen aufweisen, die die Rückenflächen der Backplatten überragen.

Es ist bekannt, dass Backzangen Backzangengestelle umfassen, an denen die Backplatten angebracht sind. Diese Backzangengestelle sind öffenbar und schließbar ausgebildet, wobei im Innenbereich zwei Backplatten angebracht sind, die die Backform bilden. Nachteilig an derartigen Konstruktionen ist, dass das außenliegende Gestell die Beheizung der Backzange von außen beeinträchtigt.

Dem Stand der Technik sind auch Backzangen mit selbsttragenden Backplatten ohne Backzangengestelle zu entnehmen. Bei herkömmlichen selbsttragenden Backplatten werden Verstellmechanismen eingesetzt, die einer Justierung des Verlaufs der Backplatten dienen und die der Aufweitung der Backform durch die Druckkräfte entgegenwirken. Insbesondere bei einer induktiven Beheizung der Backplatten müssen die Verstellmechanismen innerhalb der Backplatten angeordnet sein, da sie sonst Beheizung der Backform und der Backplatten behindern. Herkömmliche Verstellmechanismen sind oft nicht dazu geeignet, eine ausreichend genaue Einstellung des Grades der Vorspannung der Backplatten zu ermöglichen. Zudem müssen herkömmliche Verstellmechanismen oft in aufwändigen Fertigungsverfahren hergestellt werden.

Eine ungleichmäßige Beheizung oder eine ungenaue Vorspannung setzt die Qualität der hergestellten Backprodukte und damit auch die Effizienz des Backofens herab. Auch hohe Herstellungskosten des Backofens und der Backprodukte verringern die Effizienz.

Aufgabe der Erfindung ist es nun, eine Backplatte zu schaffen, die die Nachteile des Standes der Technik überwindet. Insbesondere ist es Aufgabe der Erfindung die Vorspannung der Backplatte zu verbessern.

Die erfindungsgemäße Aufgabe wird durch die Merkmale des unabhängigen Patentanspruchs 1 gelöst.

Die Erfindung betrifft insbesondere eine Backplatte, für eine Backplattenvorrichtung eines Backofens zum Herstellen von in einem Backvorgang unter Überdruck gebackenen knusprig-spröden Waffeln aus einer im unausgebackenen Zustand 45-70% Wasser enthaltenden Backmasse.

Die Backplatte umfasst einen plattenförmigen Grundkörper, der einer Haupterstreckungsebene folgt.

Der Grundkörper weist eine außenliegende Backfläche auf, die beim Backvorgang eine Seite einer Überdruckbackform bildet.

Der Grundkörper weist an der der Backfläche gegenüberliegenden Außenseite eine Rückenfläche auf, über die beim Backvorgang ein Energieeintrag zur Beheizung der Backplatte erfolgt.

In der Rückenfläche des Grundkörpers ist eine Spannnut mit einer ersten Nutflanke, einer zweiten Nutflanke und einem Nutgrund ausgenommen.

Erfindungsgemäß ist eine Spannleiste vorgesehen, die in die Spannnut und damit zwischen die Nutflanken eingesetzt ist.

Die Spannleiste weist eine erste Spannfläche, eine zweite Spannfläche und eine Basisfläche auf.

Erfindungsgemäß sind mehrere erste Spannmittel und mehrere zweite Spannmittel vorgesehen, die in eine gespannte Stellung bringbar sind und die insbesondere als Spannschrauben ausgebildet sind.

Nicht beansprucht ist, dass die Spannmittel, in ihrer gespannten Stellung, an der Spannleiste angreifen und ausgehend von der Spannleiste beidseitig durch die Nutflanken in den Grundkörper ragen und dort angreifen. Die Spannmittel greifen gegebenenfalls über Zwischenelemente wie Beilagscheiben an dem Grundkörper an, wobei diese Zwischenelemente als Teil der Spannmittel angesehen werden können.

Nicht beansprucht ist, dass die Spannmittel, in ihrer gespannten Stellung, die Nutflanken nach innen Richtung oder an die Spannleiste ziehen, dabei die Backfläche des Grundkörpers konvex vorwölben und die Backplatte in einer vorgespannten Stellung halten.

Gegebenenfalls ist vorgesehen, dass entlang des Längsverlaufs der Spannleiste mehrere erste Spannmittel und mehrere zweite Spannmittel vorgesehen sind.

Nicht beansprucht ist, dass die ersten Spannmittel in ihrer gespannten Stellung durch die erste Spannfläche der Spannleiste und durch die erste Nutflanke der Spannnut in den Grundkörper ragen und dort angebracht und insbesondere verschraubt sind.

Nicht beansprucht ist, dass die zweiten Spannmittel in ihrer gespannten Stellung durch die zweite Spannfläche der Spannleiste und durch die zweite Nutflanke der Spannnut in den Grundkörper ragen und dort angebracht und insbesondere verschraubt sind.

Gegebenenfalls ist vorgesehen, dass die Spannleiste gegenüber der Spannnut ein gewisses Untermaß aufweist, wenn sich die Spannmittel in ihrer nicht gespannten, also entspannten Stellung befinden und die Backplatte dadurch entspannt ist.

Gegebenenfalls ist vorgesehen, dass die Breite der Spannnut verkleinert und die Spannleiste zwischen den Nutflanken in der Spannnut gehalten und eingeklemmt ist, wenn sich die Spannmittel in ihrer gespannten Stellung befinden.

Nicht beansprucht ist, dass zwischen der zweiten Spannfläche und der zweiten Nutflanke ein Spalt freigehalten ist, wenn sich die zweiten Spannmittel in ihrer entspannten und die ersten Spannmittel in ihrer gespannten Stellung befinden.

Nicht beansprucht ist, dass die zweite Nutflanke an die zweite Spannfläche gezogen ist und an dieser anliegt, wenn sich die ersten Spannmittel und die zweiten Spannmittel in ihrer gespannten Stellung befinden.

Gegebenenfalls ist vorgesehen, dass eine verstellbare Justieranordnung vorgesehen ist.

Nicht beansprucht ist, dass die Justieranordnung eine Wahl des Untermaßes und/oder eine Einstellung der Spaltbreite des bei entspannter Backplatte zwischen zweiter Spannfläche und zweiter Nutflanke freigehaltenen Spalts ermöglicht.

Gegebenenfalls ist vorgesehen, dass die Justieranordnung eine Wahl des Grades der Vorspannung der Backplatte durch die Spannmittel ermöglicht.

Gegebenenfalls ist vorgesehen, dass die Justieranordnung ein oder mehrere Distanzmittel wie Distanzplättchen umfasst.

Gegebenenfalls ist vorgesehen, dass die Spannleiste mit ihrer Basisfläche am Nutgrund anliegt, wenn sich die Spannmittel in ihrer gespannten Stellung befinden.

Gegebenenfalls ist vorgesehen, dass die Spannleiste bei entspannter Backplatte mit ihrer Basisfläche am Nutgrund entlang der Haupterstreckungsebene und quer zum Längsverlauf der Spannnut, insbesondere entlang der Wirkrichtung der Justieranordnung, translatorisch geführt ist.

Nicht beansprucht ist, dass die Spannmittel von der Spannleiste, gegenüber der Haupterstreckungsebene betrachtet, schräg Richtung Backfläche durch die Nutflanken in den Grundkörper ragen.

Nicht beansprucht ist, dass die Nutflanken in jenen Bereichen, in denen die Spannmittel angeordnet sind, also insbesondere in die Nutflanken eindringen, orthogonal zum Verlauf der Spannmittel verlaufen.

Nicht beansprucht ist, dass die zweite Spannfläche eine dem Längsverlauf der Spannleiste folgende Anschlagwulst aufweist, die bevorzugt ein abgerundetes Profil aufweist und bei gespannten Spannmitteln linienförmig an der zweiten Nutflanke anliegt. Insbesondere liegt die Spannleiste entlang ihres Längsverlaufs linienförmig an der Nutflanke an. Gegebenenfalls weist die Anschlagwulst ein Dreiecks-, Rechtecks- oder Trapezprofil auf. Das abgerundete Profil führt zu einer vorteilhaften Pressung im Linienkontakt. Es kann allerdings zu einer plastischen Verformung durch Überspannen der Spannmittel und dadurch zu einer geringfügigen Abflachung der Anschlagwulst kommen. Der Kontaktbereich wird dennoch als linienförmig bezeichnet.

Nicht beansprucht ist, dass die erste Nutflanke der Spannnut bei gespannten Spannmitteln unter Zwischenschaltung der Justieranordnung und insbesondere unter Zwischenschaltung von Distanzplättchen an die Spannleiste gezogen ist.

Nicht beansprucht ist, dass die zweite Nutflanke der Spannnut bei gespannten Spannmitteln an die Anschlagwulst an der Spannleiste gezogen ist.

Gegebenenfalls ist vorgesehen, dass die Spannleiste in der Spannnut versenkt ist oder im Wesentlichen bündig mit der Rückenfläche abschließt. "Im Wesentlichen bündig" bedeutet in diesem Zusammenhang, dass die Spannleiste geringfügig, beispielsweise weniger als 0,5 mm oder weniger als 0,2 mm, über die Rückenfläche hinausragen kann, wenn dies beispielsweise für eine Justierung notwendig ist. Bevorzugt ragt die Spannleiste aber nicht über die Rückenfläche hinaus.

Gegebenenfalls ist vorgesehen, dass die Spannmittel in der Spannleiste versenkt sind oder zumindest bündig mit der Rückenfläche abschließen.

Gegebenenfalls ist vorgesehen, dass im Nutgrund eine dem Längsverlauf der Spannnut folgende Biegenut zur Herabsetzung der Biegesteifigkeit des Grundkörpers ausgenommen ist.

Offenbart wird ferner eine Backplattenvorrichtung, gegebenenfalls eine Backzange, für einen Backofen zum Herstellen von in einem Backvorgang unter Überdruck gebackenen knusprig-spröden Waffeln aus einer im unausgebackenen Zustand 45-70% Wasser enthaltenden Backmasse, umfassend zwei, bevorzugt selbsttragend ausgebildete, Backplatten die und zwei beidseitig der Backplatten angeordnete und über die Backplatten miteinander verbundene Verbindungsvorrichtungen, wobei die Verbindungsvorrichtungen derart ausgestaltet sind, dass die Backplattenvorrichtung öffenbar, schließbar und in der geschlossenen Stellung zur Bildung einer Überdruckbackform verriegelbar ausgebildet ist.

Offenbart wird ferner einen Backofen zum Herstellen von in einem Backvorgang unter Überdruck gebackenen knusprig-spröden Waffeln aus einer im unausgebackenen Zustand 45-70% Wasser enthaltenden Backmasse, umfassend einen Endlosförderer und mehrere entlang des Endlosförderers vorgesehene Backplattenvorrichtungen, die aneinandergereiht jeweils nacheinander:
- einen Backmassenauftragsbereich zum Auftrag einer Backmasse auf eine geöffnete Backplattenvorrichtung,
- einen Schließbereich zum Schließen der Backplattenvorrichtungen,
- einen Backraum zum Backen der Backprodukte in den geschlossenen Backplattenvorrichtungen, in dem mindestens eine Heizanordnung zur Beheizung der im Backraum befindlichen Backplattenvorrichtungen vorgesehen ist,
- einen Öffenbereich zum Öffnen der Backplattenvorrichtungen
- und einen Waffelentnahmebereich zur Entnahme der gebackenen Waffeln aus den geöffneten Backplattenvorrichtungen, durchlaufen.

Die Backplatte weist einen Grundkörper auf. Der Grundkörper weist auf einer Fläche eine außenliegende Backfläche auf. Diese außenliegende Backfläche kann beispielsweise mit einer üblichen Gravur versehen sein, die bei der Herstellung von Flachwaffeln eingesetzt wird. Gegebenenfalls kann die Backfläche eine beliebige reliefartige Oberfläche haben, die zur Herstellung von sogenannten Hohlwaffeln eingesetzt werden kann. Die Backfläche bildet beim Backvorgang eine Seite bzw. einen Teil einer Überdruckbackform.

Um dem Druck entgegenzuwirken, der während des Backvorgangs in der Überdruckbackform entsteht, wird die Backplatte bevorzugt vorgewölbt bzw. vorgespannt. Die Vorspannung bzw. die Vorwölbung geschieht bevorzugt gegen den Backdruck, der beim Backen in der Überdruckbackform auftritt. Insbesondere bedeutet dies, dass die Backfläche konvex vorgewölbt wird.

Die Vorspannung bzw. Vorwölbung geschieht über Spannmittel, die eine gespannte Stellung und eine entspannte Stellung aufweisen können. Dadurch können auch der Grundkörper der Backplatte und damit die Backplatte selbst vorgespannt bzw. entspannt sein.

Um die Backplatte von dem entspannten in den vorgespannten Zustand zu bringen, werden die Spannmittel betätigt. Die Spannmittel sind beispielsweise als Spannschrauben ausgebildet. Die Spannmittel ziehen in einer nicht beanspruchten Ausführungsform die Nutflanken der Spannnut an die Spannleiste.

Durch die Wahl des Untermaßes der Spannleiste gegenüber der Spannnut bzw. durch die Justieranordnung kann die maximale Vorspannung der Backplatte begrenzt und dadurch eingestellt werden. Das Maß dieser Vorspannung ist in allen Ausführungsformen jedoch bevorzugt nicht durch die Spannkraft der Spannmittel, sondern ausschließlich durch die Dimensionierung der Spannnut, der Spannleiste und bevorzugt auch der Justieranordnung bestimmt.

In allen Ausführungsformen können die Spannmittel gespannt werden, bis die Spannleiste durch die Spannmittel innerhalb der Spannnut gehalten bzw. eingeklemmt ist. Ein weiteres Festziehen der Spannmittel erhöht dann die Spannung der Spannmittel, bevorzugt aber nicht mehr die Vorspannung der Backplatte. Durch weiteres Festziehen der Spannmittel können diese vorgespannt werden, was ein selbsttätiges Lösen der Spannung verhindert.

Die Spannnut ist in der Rückenfläche vorgesehen. Die Spannnut verläuft bevorzugt über die gesamte Breite der Backplatte und durchsetzt daher die gesamte Breite der Backplatte. Die Spannnut erstreckt sich bevorzugt in allen Ausführungsformen von der Rückenfläche des Grundkörpers in den Grundkörper hinein. Jedoch erstreckt sich die Spannnut nicht bis zur Backfläche des Grundkörpers, sondern ist lediglich nutförmig ausgebildet, sodass zwischen Backfläche und Nutgrund ausreichend Material des Grundkörpers bestehen bleibt. Die Spannnut kann durch einfaches Fräsen bzw. Profilfräsen in der Rückenfläche des Grundkörpers hergestellt werden. Gegebenenfalls kann die Spannnut beim Gießvorgang des Grundkörpers hergestellt oder vorbereitet werden. Die Spannnut erstreckt sich bevorzugt in allen Ausführungsformen als durchgehende Nut mit konstantem Querschnitt entlang der gesamten Länge bzw. Breite des Grundkörpers der Backplatte.

Der Grundkörper ist bevorzugt rechteckig ausgeführt und an seinen Schmalseiten mit den Verbindungsvorrichtungen verbunden. Die Spannnut verläuft bevorzugt mittig und parallel zu den Schmalseiten.

Die Spannnut bildet bevorzugt einen geschwächten Bereich zum Biegen des Grundkörpers, wobei die Schwächung des Grundkörpers in der gespannten Stellung dadurch verringert und die Stabilität verbessert wird, dass die Spannleiste in der gespannten Stellung in der Spannnut eingeklemmt ist. Hierdurch kann die Spannleiste zusammen mit dem Grundkörper einen festen Verbund bilden.

Die Spannleiste liegt bevorzugt in einer definierten Lage an dem Nutgrund an. Bei einer Backplatte mit ebener Rückenfläche sind die Spannnut und die Spannleiste derart dimensioniert, dass die Spannleiste bevorzugt bündig mit der Rückenfläche abschließt. Dies hat Vorteile bei der induktiven Beheizung der Backplatte. Die Spannnut und die Spannleiste sind dabei bevorzugt derart ausgebildet, dass die Spannleiste in unterschiedlichen Stellungen innerhalb der Spannnut bündig mit der Rückenfläche des Grundkörpers abschließt. Dies ermöglicht eine Einstellung der Vorspannung, ohne dabei die effiziente induktive Beheizung zu beeinträchtigen.

Bevorzugt ist vorgesehen, dass die Spannleiste und auch die Spannmittel zwischen der Rückenfläche und der Backfläche, insbesondere innerhalb der Backplatte, angeordnet sind.

Bevorzugt weist auch die Spannleiste eine ebene Rückenfläche auf, die nur durch Öffnungen zur Durchführung und Betätigung der Spannmittel unterbrochen ist. Gegebenenfalls können mehr als 50%, bevorzugt mehr als 70% oder mehr als 80% der Rückenfläche der Spannleiste ebenenförmig ausgebildet sein.

Gegebenenfalls ist vorgesehen, dass der Normalabstand zwischen der Backfläche und der Rückenfläche im Bereich von 4 cm bis einschließlich 10 cm liegt.

Die Spannleiste kann in einer nicht beanspruchten Ausführungsform einen trapezförmigen bzw. keilförmigen Querschnitt aufweisen. Gegebenenfalls ist auch nur ein Abschnitt des Querschnitts der Spannleiste keilförmig bzw. trapezförmig.

Die Spannleiste ist bevorzugt in allen Ausführungsformen ein eigener Teil, der kein Teil des Grundkörpers ist, sondern als eigene Komponente in die Spannnut eingelegt wird. Die Spannleiste ist bevorzugt eine einstückige und/oder durchgehende Leiste. Die Spannleise ist bevorzugt profilförmig ausgebildet und weist über ihren Längsverlauf einen konstanten Querschnitt auf, wobei das Profil stellenweise durch Elemente wie Schraubenöffnungen unterbrochen sein kann.

Durch eine durchgehende Spannleiste kann eine statische Überbestimmung bzw. eine Fehlmontage vermieden werden.

Gegebenenfalls sind die Grundkörper der Backplatten einstückig ausgebildet.

Der Grundkörper und die Spannleiste können aus dem gleichen Material bestehen bzw. aus dem gleichen Material gefertigt sein, beispielsweise um einen Unterschied in der thermischen Ausdehnung zu vermeiden.

Insbesondere kann die Spannleiste aus Gusseisen, beispielsweise aus Sphäroguss gefertigt sein. Die funktionalen Flächen, insbesondere die Spannflächen und die Basisfläche können bearbeitete Flächen sein. Die Backplatten sind bevorzugt aus Gusseisen, insbesondere aus Sphäroguss gefertigt.

Bevorzugt ist vorgesehen, dass die Backplattenvorrichtung, insbesondere die Backplatten, derart ausgestaltet ist, dass sie durch eine über einen Induktorspalt wirkende Induktionsheizvorrichtung aufheizbar ist. Dabei kann vorgesehen sein, dass die Rückenfläche der Backplatte dazu eingerichtet ist, als eine Seite des Induktorspaltes zu wirken und/oder eine Seite des Induktorspaltes zu bilden.

Bevorzugt ist vorgesehen, dass die mindestens eine Rückenfläche der Backplatten einer Ebene folgt und insbesondere ebenenförmig ausgebildet ist. Eine derartige ebene Ausbildung der Rückenfläche ist eine vorteilhafte Ausführungsform bei einer Heizanordnung zur induktiven Beheizung der Backplatte. Die Rückenfläche ist dabei bevorzugt plan bzw. rippenlos ausgebildet.

Bevorzugt weist der Backofen eine Induktionsheizvorrichtung auf. Die Induktionsheizvorrichtung kann beabstandet von der Backplattenvorrichtung angeordnet sein. Bevorzugt ist zwischen der Backplatte, insbesondere der Rückseite der Backplatte, und der Induktionsheizvorrichtung der Induktorspalt freigehalten.

Die Induktionsheizvorrichtung ist gegebenenfalls dazu eingerichtet, die Backplattenvorrichtung über den Induktorspalt zu beheizen.

Der Induktorspalt kann als länglicher schmaler Zwischenraum ausgebildet sein, welcher entlang seiner Längserstreckung einerseits von den Rückenflächen der Backplatten und andererseits von der Induktionsheizvorrichtung begrenzt ist.

Mit anderen Worten kann der Induktorspalt als Zwischenraum zwischen der Induktionsheizvorrichtung und der Rückenfläche der Backplatte ausgebildet sein.

Gegebenenfalls kann die Rückenfläche aber auch reliefartig ausgestaltet sein und Rippen aufweisen. Dies ist vorteilhaft bei einer Heizanordnung, die einen Brenner bzw. einen Gasbrenner aufweist.

Gegebenenfalls ist vorgesehen, dass die Rückenflächen der Backplatten jeweils eine Oberfläche zur gleichmäßigen Beheizung der Backplatte und der Überdruckbackform, wie insbesondere ein Waben-, Pyramiden- oder Rippenmuster, oder eine glatte Oberfläche, aufweisen.

In allen Ausführungsformen ist die Backplatte bevorzugt als selbsttragende Backplatte ausgebildet. Eine derartige selbsttragende Backplatte ist bevorzugt rahmenlos ausgebildet. Die Verbindungsvorrichtungen der Backplattenvorrichtung sind bevorzugt ausschließlich über die Backplatten miteinander verbunden. Ein Rahmen, der die Backplatte hält bzw. der die Verbindungsvorrichtungen miteinander verbindet, kann dabei entfallen.

Die Verbindungsvorrichtungen verbinden die beiden Backplatten einer Backplattenvorrichtung für den Backvorgang. Insbesondere ist die Verbindungsvorrichtung derart ausgestaltet, dass die Backplatten geöffnet und geschlossen werden können. Beispielsweise kann die Backplattenvorrichtung als Backzange ausgebildet sein, bei der eine Verbindungsvorrichtung als Scharnier und die andere Verbindungsvorrichtung als Verriegelungsvorrichtung ausgebildet ist.

Bevorzugt sind die Verbindungsvorrichtungen an den Schmalseiten der Backplatten angeordnet.

Der Längsverlauf der Spannnut und der Spannleiste erstreckt sich in allen Ausführungsformen bevorzugt im Bereich zwischen den beiden Verbindungsvorrichtungen der Backplattenvorrichtung, also quer zu einer Achse, die von einer Verbindungsvorrichtung zur anderen Verbindungsvorrichtung verläuft. Der Verlauf der Biegelinie der Vorspannung verläuft folglich entlang der Achse, die von einer Verbindungsvorrichtung zur anderen Verbindungsvorrichtung verläuft.

In allen Ausführungsformen ist bevorzugt vorgesehen, dass die Spannmittel als Spannschrauben ausgebildet sind, wobei die Spannschrauben jeweils einen Schraubenkopf und einen Schraubenschaft mit einem Gewinde aufweisen. Der Schraubenkopf ist in der gespannten Stellung der Spannschraube vorzugsweise an einer Schulter innerhalb der Spannleiste abgestützt. Der Schaft ragt dabei von dieser Schulter, durch die Spannleiste hindurch, in den Grundkörper. Das Gewinde des Schraubenschafts ist in den Grundkörper eingeschraubt. Die ersten Spannmittel greifen, quer zum Längsverlauf der Spannleiste, an einer anderen Stelle an als die zweiten Spannmittel. Insbesondere sind die ersten Spannmittel, quer zum Längsverlauf der Spannleiste, beabstandet von den zweiten Spannmitteln angeordnet. Die Schraubenköpfe sind bevorzugt in der Spannleiste versenkt angeordnet.

Eine Backplatte kann beispielsweise 2-6, bevorzugt 3-5, erste Spannmittel aufweisen. Eine Backplatte kann beispielsweise 2-6, bevorzugt 3-5, zweite Spannmittel aufweisen.

Die für die Durchführung der Spannmittel in der Spannleiste vorgesehenen Durchgangsöffnungen weisen bevorzugt ein gewisses Übermaß bzw. Spiel gegenüber den Spannmitteln auf, das derart bemessen ist, dass ein zusammenziehen der Spannnut und eine Vorwölbung des Grundkörpers kinematisch nicht behindert wird.

Das Vorspannen bzw. Vorwölben einer Backplatte kann wie nachfolgend beschrieben erfolgen.

In einem ersten Schritt wird der Grundkörper zur Verfügung gestellt. Dieser weist auf einer Seite eine Backfläche und auf seiner anderen Seite eine Rückenfläche auf, in der eine Spannnut vorgesehen ist.

In einem weiteren Schritt wird eine Spannleiste in die Spannnut eingesetzt. Die Spannleiste ist zwar der Form der Spannnut angepasst, sie weist jedoch gegenüber der Spannnut ein gewisses Untermaß auf. Das Untermaß ist dabei entlang der Breite, also quer zum Längsverlauf der Spannleiste gegeben. Durch dieses Untermaß ist zwischen der Spannnut und der Spannleiste bevorzugt ein Spalt freigehalten, wenn sich der Grundkörper in seiner entspannten Stellung befindet. Die Spannleiste weist gegenüber der Spannunut bei entspannter Backplatte somit gegebenenfalls ein gewisses Spiel in Querrichtung auf.

In einem nächsten Schritt werden die Spannmittel gespannt. Insbesondere werden mehrere erste Spannmittel und mehrere zweite Spannmittel gespannt. Die Spannmittel können beispielsweise Stellschrauben bzw. Spannschrauben sein. Die Spannmittel verlaufen gemäß einer nicht beanspruchten Ausführungsform von der Spannleiste beidseitig in die Nutflanken und weiter in den Grundkörper, wo sie mit dem Grundkörper verbunden und insbesondere verschraubt sind. Durch Spannen der Spannmittel wird die Breite der Nut verkleinert. Insbesondere werden die beiden Nutflanken Richtung Spannleiste gezogen. Dadurch, dass die Spannleiste in der entspannten Stellung der Backplatte ein bestimmtes Untermaß gegenüber der Spannnut aufweist, können die Nutflanken um ein gewisses Maß Richtung Spannleiste gezogen werden, bis sie anstehen. Dadurch wird die Backplatte vorgewölbt bzw. vorgespannt.

Um den Grad der Vorspannung einstellen zu können, kann eine Justieranordnung vorgesehen sein. Eine bevorzugte Justieranordnung umfasst Distanzmittel wie beispielsweise Distanzplättchen. Diese Distanzplättchen können zwischen Spannleiste und Nut, insbesondere gemäß einer nicht beanspruchten Ausführungsform zwischen erster Spannfläche und erster Nutflanke, eingelegt werden. Durch die Justieranordnung kann daher das Untermaß bzw. die Breite des Spalts bei entspanntem Grundkörper eingestellt werden. In der Regel werden somit Distanzmittel zwischen Spannnut und Spannleiste eingelegt, bevor die Spannmittel gespannt werden. Der bevorzugte Einstellbereich liegt zwischen 1,0mm und 2,5mm, es ist dieser jedoch keine Limitierung nach oben bzw. unten gegeben, wenngleich es vorteilhaft ist, einen Wert >0,5mm zu wählen.

Gegebenenfalls kann jedoch auch vorgesehen sein, dass die Justieranordnung bzw. die Distanzmittel entfallen. In diesem Fall wird die Wahl des Grades der Vorspannung allein durch die Dimensionierung der Spannnut und der Spannleiste bestimmt. Bevorzugt ist der Grad der Vorspannung der Backplatte unabhängig vom Maß der Spannung der Spannmittel.

Bevorzugt ist in allen Ausführungsformen nur eine einzige Spannleiste und/oder eine einzige Spannnut pro Backplatte vorhanden.

In weiterer Folge wird die Erfindung anhand der Figuren weiter beschrieben.
**Fig. 1** zeigt eine schematische Schnittdarstellung einer möglichen Ausführungsform eines Backofens.
**Fig. 2** zeigt eine schematische Schrägansicht einer nicht beanspruchten Ausführungsform einer Backplattenvorrichtung.
**Fig. 3** zeigt eine schematische Schnittdarstellung eines Details im Bereich der Spannnut bzw. im Bereich der Spannleiste einer nicht beanspruchten Ausführungsform.
**Fig. 4** zeigt eine schematische Schnittdarstellung eines Details einer erfindungsgemäßen Möglichkeit zum Vorspannen einer Backplatte.

Wenn nicht anders angegeben, so entsprechen die Bezugszeichen folgenden Komponenten: Backplatte 1, Backplattenvorrichtung 2, Backofen 3, Grundkörper 4, Haupterstreckungsebene 5, Backfläche 6, Rückenfläche 7, Spannnut 8, erste Nutflanke 9, zweite Nutflanke 10, Nutgrund 11, Spannleiste 12, erste Spannfläche 13, zweite Spannfläche 14, Basisfläche 15, erstes Spannmittel 16, zweites Spannmittel 17, Längsverlauf 18, Spalt 19, Justieranordnung 20, Anschlagwulst 21, Biegenut 22, Verbindungsvorrichtung 23, Endlosförderer 24, Backmassenauftragsbereich 25, Schließbereich 26, Backraum 27, Heizanordnung 28, Öffenbereich 29, Waffelentnahmebereich 30, Justiertasche 31, Wirkrichtung (der Justieranordnung) 32, Spannrichtung (des zweiten Spannmittels) 33, Nutflankenwinkel 34.

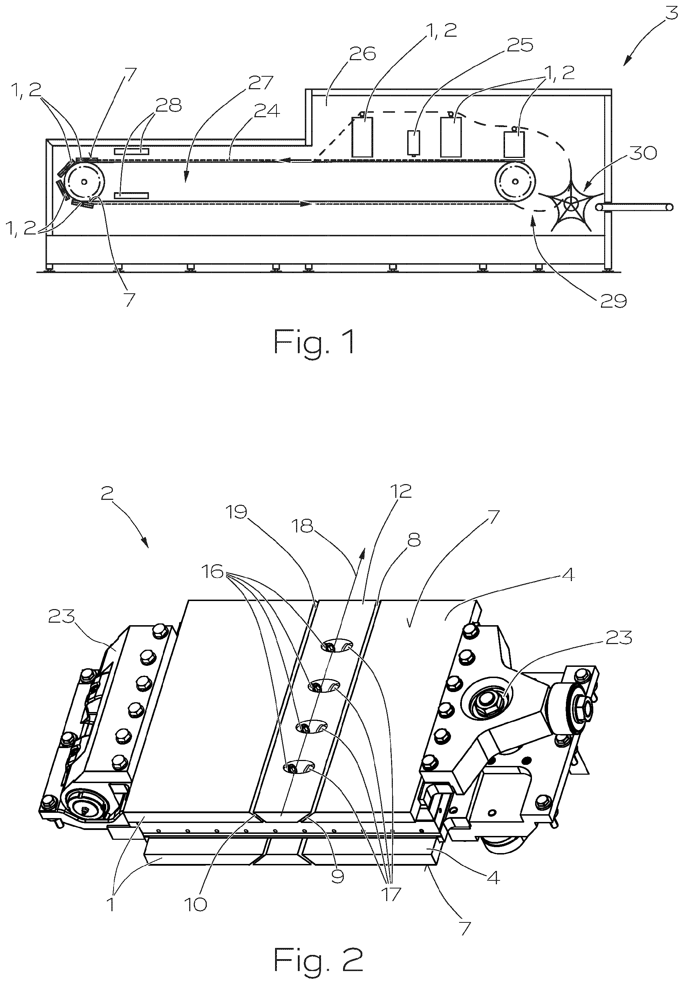

**Fig. 1** zeigt eine schematische Schrägansicht bzw. Schnittdarstellung eines Backofens 3. Der Backofen 3 umfasst eine Vielzahl an Backplattenvorrichtungen 2, die entlang einer Umlaufbahn durch den Backofen 3 befördert werden. Die Backplattenvorrichtungen 2 weisen jeweils zwei Backplatten 1 auf. Die Backplatten 1 bzw. die Backplattenvorrichtungen 2 sind bevorzugt erfindungsgemäß ausgebildet.

Zur Bewegung der Backplattenvorrichtungen 2 ist in der vorliegenden Ausführungsform ein Endlosförderer 24 vorgesehen. Der Endlosförderer 24 ist beispielweise ein umlaufend angetriebenes Förderorgan, wie beispielsweise eine Kette oder ein Riemen. An dem Endlosförderer 24 sind nacheinander die Backplattenvorrichtungen 2 angebracht. Die Backplattenvorrichtungen 2 werden in einem Backmassenauftragsbereich 25 mit einer Backmasse beschickt. In einem Schließbereich 26 werden die Backplattenvorrichtungen 2 geschlossen. In der vorliegenden Ausführungsform sind die Backplattenvorrichtungen 2 bevorzugt als Backzangen ausgebildet. Die geschlossenen Backplattenvorrichtungen 2 werden, zum Backen der Backmasse, durch einen Backraum 27 befördert. In dem Backraum 27 ist eine Heizanordnung 28 vorgesehen. In der vorliegenden Ausführungsform ist die Heizanordnung 28 als induktive Heizung ausgebildet. Feststehende Induktoren heizen die vorbeifahrenden Backplattenvorrichtungen 2 bzw. deren Backplatten 1 induktiv auf.

Alternativ zu einer induktiven Heizung kann jedoch auch eine herkömmliche Heizung, wie beispielsweise eine Gasheizung bzw. eine Strahlungsheizung vorgesehen sein. Die Backplattenvorrichtungen 2, insbesondere die Backplatten 1 bzw. deren Rückenflächen 7, können an die Art der Beheizung, also an die Heizanordnung 28, angepasst sein.

Bei der Herstellung knusprig spröder Waffeln aus einem im unausgebackenen Zustand 45 bis 70% Wasser enthaltenden Backmasse verdampft beim Backvorgang innerhalb kürzester Zeit ein großes Volumen an Wasserdampf aus der Backmasse. Um dem dabei entstehenden Druck entgegenzuwirken, kann die Backplattenvorrichtung 2 verriegelt werden. Zudem ist in allen Ausführungsformen bevorzugt vorgesehen, dass die Backplattenvorrichtungen 2 Dichtleisten bzw. Ausdampfleisten umfassen.

Die Backplattenvorrichtungen 2 bilden in ihrem geschlossenen Zustand eine Überdruckbackform. Insbesondere können zur Bildung der Überdruckbackform Dichtleisten bzw. Ausdampfleisten und die Verriegelungsvorrichtung vorgesehen sein.

Die hergestellten Backprodukte bzw. Backzwischenprodukte sind meist dünnwandige Waffelformkörper. Diese können z.B. als Flachwaffelblätter oder als sogenannte Hohlwaffelblätter ausgebildet sein. Für die Herstellung qualitativ hochwertiger Backprodukte ist es wichtig, dass die Waffelblattdicke über deren gesamten Verlauf im Wesentlichen konstant gehalten wird. Nun führt der in der Überdruckbackform entstehende Druck jedoch zu einem Aufweiten der Backplattenvorrichtungen 2, was insbesondere im Mittenbereich der Backplattenvorrichtungen 2 zu einer Vergrößerung der Dicke des Waffelformkörpers führen würde. Um diesem Aufweiten entgegenzuwirken, werden die Backplatten 1 vorgespannt bzw. Richtung Überdruckbackform vorgewölbt.

Nach dem Backen der Backmasse in dem Backraum 27 durchlaufen die Backplattenvorrichtungen 2 einen Öffenbereich 29, in dem die Backplattenvorrichtungen 2 geöffnet werden. In einem Waffelblattentnahmebereich 30 werden die fertig gebackenen Waffelformkörper dann aus den Backplattenvorrichtungen 2 entnommen.

In allen Ausführungsformen ist bevorzugt vorgesehen, dass die Herstellung der Waffelformkörper in einem kontinuierlichen Prozess geschieht.

**Fig. 2** zeigt eine schematische Schrägansicht einer möglicher Ausführungsform einer Backplattenvorrichtung 2. Die Backplattenvorrichtung 2 umfasst zwei Backplatten 1 gemäß einer nicht beanspruchten Ausführungsform. Die Backplatten 1 umfassen jeweils einen Grundkörper 4, wobei der Grundkörper 4 auf einer Seite eine Rückenfläche 7 aufweist. Auf der anderen Seite des Grundkörpers 4 ist eine Backfläche 6 vorgesehen, die einen Teil einer Überdruckbackform bildet, die aber in der Abbildung der Fig. 2 nicht sichtbar ist.

Wie bevorzugt in allen Ausführungsformen, können die Backplatten 1 selbsttragend ausgebildet sein. Insbesondere umfasst die Backplattenvorrichtung 2 auf beiden Seiten jeweils eine Verbindungsvorrichtung 23. Auf der einen Seite ist die Verbindungsvorrichtung 23 in der vorliegenden Ausführungsform als Scharniervorrichtung ausgebildet. Auf der anderen Seite ist die Verbindungsvorrichtung 23 bevorzugt als Verriegelungsvorrichtung ausgebildet. Dadurch ist eine Backzange gebildet, die öffenbar, schließbar und in ihrer verschlossenen Stellung verriegelbar ausgebildet ist. Rund um die Überdruckbackform sind bevorzugt Dichtleisten bzw. Ausdampfleisten vorgesehen. Die beiden Verbindungsvorrichtungen 23 sind über die Backplatten 1 und bevorzugt ausschließlich über die Backplatten 1 miteinander verbunden. Ein Traggestell für die Backplatten 1 ist in dieser Ausführungsform nicht vorgesehen und auch nicht notwendig.

Um dem Backdruck in der Überdruckbackform entgegenwirken zu können, können die Backplatten 1 vorgespannt bzw. vorgewölbt werden. Hierzu ist im Grundkörper 4 der Backplatte 1 eine Spannnut 8 vorgesehen. In der Spannnut 8 ist eine Spannleiste 12 angeordnet. Die Spannleiste 12 weist in Querrichtung zum Längsverlauf 18 der Spannnut 8 bzw. der Spannleiste 12 ein gewisses Untermaß gegenüber der Spannut 8 auf, wenn die Backplatte 1 nicht vorgespannt ist. Insbesondere ist zwischen der Spannleiste 12 und der Spannnut 8 in der entspannten Stellung der Backplatte 1 ein Spalt 19 freigehalten. Um die Backplatte 1 nun vorzuspannen, sind Spannmittel 16, 17 vorgesehen. Bevorzugt sind entlang des Längsverlaufs 18 der Spannleiste 12 mehrere erste Spannmittel 16 und mehrere zweite Spannmittel 17 vorgesehen. In der vorliegenden Ausführungsform sind vier erste Spannmittel 16 und vier zweite Spannmittel 17 vorgesehen. Die Spannmittel 16, 17 ragen beidseitig aus der Spannleiste 12 in den Grundkörper 4. Durch Spannen der Spannmittel 16, 17 werden die Nutflanken 9, 10 an die Spannleiste 12 gezogen und die Backplatte 1 wird vorgespannt bzw. vorgewölbt.

Die Backplattenvorrichtung 2 kann herkömmliche Komponenten wie beispielsweise Laufrollen zum Verfahren der Backplattenvorrichtungen 2 im Backofen 3 sowie Führungsrollen zur Seitenführung oder zum Betätigen von Komponenten der Backplattenvorrichtung 2 durch eine Kulissensteuerung aufweisen.

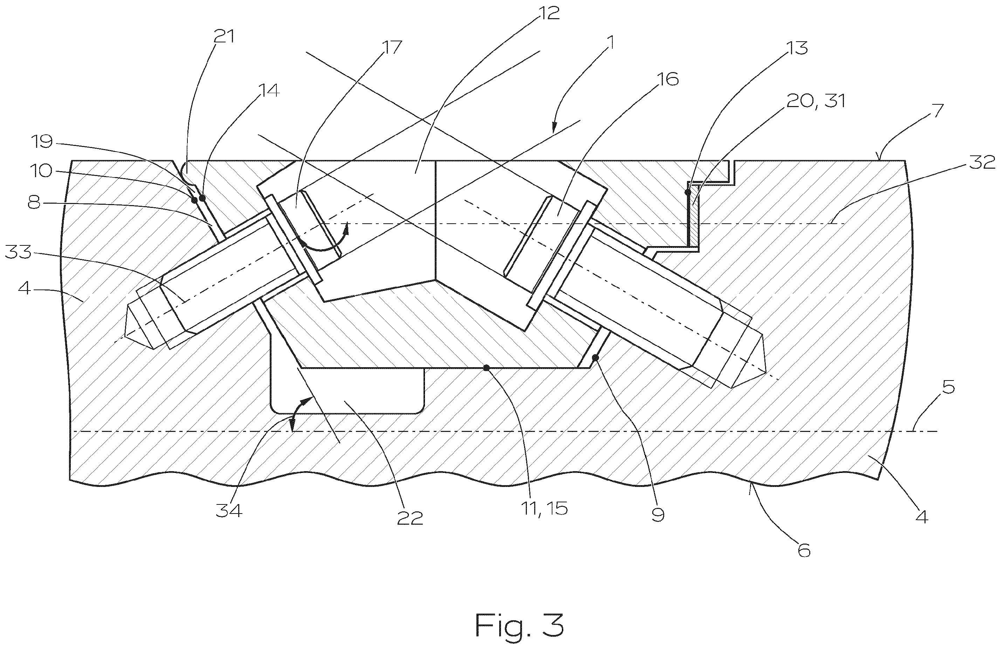

**Fig. 3** zeigt Details einer Backplatte 1 bzw. eine nicht beanspruchte Ausführungsform von Komponenten zum Vorspannen der Backplatten 1, wie sie beispielsweise bei den Backplatten 1 der Figuren 1 und/oder 2 vorgesehen sein können. Fig. 3 zeigt eine schematische Schnittdarstellung, wobei der Längsverlauf 18 der Spannnut 8 bzw. der Spannleiste 12 projizierend verläuft. Der Grundkörper 4 ist plattenförmig ausgebildet und folgt einer Haupterstreckungsebene 5.

Die Backplatte 1 umfasst einen Grundkörper 4, der auf einer Seite eine Backfläche 6 und auf der anderen Seite eine Rückenfläche 7 aufweist. Die Backfläche 6 ist bevorzugt mit einer Gravur oder mit einer beliebigen Form versehen, um dem herzustellenden Backprodukt die gewünschte Form bzw. Oberfläche zu verleihen. In der Rückenfläche 7 des Grundkörpers 4 ist eine Spannnut 8 vorgesehen. Die Spannnut 8 erstreckt sich von der Rückenfläche 7 in das Material des Grundkörpers 4 hinein. Die Spannnut 8 umfasst eine erste Nutflanke 9, eine zweite Nutflanke 10 sowie einen Nutgrund 11. Zwischen Nutgrund 11 und der Backfläche 6 ist ausreichend Platz gelassen, sodass ausreichend Material zwischen der Spannnut 8 und der Backfläche 6 vorhanden ist.

Um die Backplatte 1 vorzuspannen, wird die Spannleiste 12 in die Spannnut 8 eingelegt. Die Spannleiste 12 ist bevorzugt in allen Ausführungsformen ein eigener Teil, der kein Teil des Grundkörpers 4 ist, sondern als eigene Komponente in die Spannnut 8 eingelegt wird. Die Spannnut 8 ist bevorzugt in allen Ausführungsformen eine in die Rückenfläche 7 eingearbeitete bzw. eingefräste und/oder bei Gießvorgang des Grundkörpers 4 hergestellte Nut. Die Spannnut 8 erstreckt sich bevorzugt in allen Ausführungsformen als durchgehende Nut mit konstantem Querschnitt entlang der gesamte Länge bzw. Breite des Grundkörpers 4 der Backplatte 1.

Bevorzugt wird die Basisfläche 15 der Spannleiste 12 beim Einlegen auf den Nutgrund 11 aufgelegt. Bevorzugt sind die Spannnut 8 und die Spannleiste 12 derart ausgestaltet, dass die Spannleiste 12 am Nutgrund 11 der Spannnut 8 bei entspannter Backplatte 1 geführt gelagert ist. Insbesondere kann dadurch eine Bewegung der Spannleiste 12 in der Spannnut 8 quer zum Längsverlauf 18, also in Querrichtung erfolgen. Diese Bewegbarkeit ist dadurch gebildet, dass die Spannleiste 12 bei entspannter Stellung in Querrichtung ein gewisses Untermaß gegenüber der Spannnut 8 aufweist. In der nicht gespannten Stellung ist dadurch zwischen der Spannleiste 12 und der Spannnut 8 ein Spalt 19 vorgesehen. Die vorliegende Darstellung zeigt jedoch eine vorgespannte Backplatte 1, in der der Spalt 19 geschlossen ist. Hierbei ist die Anschlagwulst 21 an die zweite Nutflanke 10 angelegt. Bevorzugt ist die Anschlagwulst 21 dazu vorgesehen, eine Linienberührung und/oder eine definierte Berührung zwischen der zweiten Nutflanke 10 und der Spannleiste 12 zu ermöglichen. Gegebenenfalls kann jedoch eine Anschlagwulst 21 auch entfallen, sodass die Spannflächen 13, 14 direkt an den Nutflanken 9, 10 anliegen.

Bevorzugt ist jedoch vorgesehen, dass zwischen der ersten Nutflanke 9 und der ersten Spannfläche 13 eine Justieranordnung 20 vorgesehen ist. Die Justieranordnung 20 ermöglicht eine Wahl des Untermaßes bzw. eine Wahl der durch die Spannmittel 16, 17 erzielbaren Vorspannung. Die Justieranordnung 20 kann beispielsweise Distanzmittel wie Einlegeplättchen umfassen. In der vorliegenden Ausführungsform sind Einlegeplättchen vorgesehen, sodass die Spannleiste 12 in der Darstellung der Fig. 3 um ein gewisses Maß nach links verschoben ist. Durch diese Justieranordnung 20 kann daher, bei nicht gespannten Spannmitteln 16, 17 die Breite des Spaltes 19 eingestellt werden. Durch Spannen der Spannmittel 16, 17 wird dann die Vorwölbung bzw. Vorspannung erzeugt. Das Maß dieser Vorspannung ist in allen Ausführungsformen jedoch bevorzugt nicht durch die Spannkraft der Spannmittel 16, 17 sondern ausschließlich durch die Dimensionierung der Spannnut 8, der Spannleiste 12 und bevorzugt auch der Justieranordnung 20 bestimmt.

Um die Justieranordnung 20, beispielsweise vor Temperatureinwirkung und Verschmutzung, zu schützen, ist diese in einer Justiertasche 31 angeordnet. In der vorliegenden Ausführungsform ist die Justiertasche 31 durch eine stufenförmige Ausgestaltung des Profils der Spannleiste 12 und der Spannnut 8 ausgebildet. Dadurch wird die Justiertasche 31 im Bereich der Rückenfläche 7 von einem Steg abgedeckt und geschützt. Auch auf der anderen Seite, also zwischen der Justieranordnung 20 und der Backfläche 6, ist ein Steg vorgesehen. Auf diesem Steg können die Justiermittel der Justieranordnung 20 beispielsweise abgelegt bzw. positioniert werden, um in weiterer Folge die Spannleiste 12 einzulegen.

Bevorzugt ist vorgesehen, dass die Justieranordnung 20 eine bestimmte Wirkrichtung 32 aufweist. In der vorliegenden, nicht beanspruchten Ausführungsform verläuft die Wirkrichtung 32 der Justieranordnung 20 im Wesentlichen parallel zur Haupterstreckungsebene 5. Die Wirkrichtung 32 der Justieranordnung 20 kann jedoch auch geneigt, beispielsweise bis zu +10° oder -10° gegenüber der Richtung der Haupterstreckungsebene 5 geneigt sein.

Die Spannrichtung 33 des zweiten Spannmittels 17 ist bevorzugt in nicht beanspruchten Ausführungsformen gegenüber der Haupterstreckungsebene 5 geneigt. Insbesondere verlaufen die zweiten Spannmittel 17 gemäß einer nicht beanspruchten Ausführungsform von der Spannleiste 12 schräg durch die zweite Nutflanke 10 der Spannnut 8 in den Grundkörper 4. Gemäß einer nicht beanspruchten Ausführungsform verläuft die zweite Nutflanke 10 normal bzw. orthogonal zum Verlauf des zweiten Spannmittels 17 bzw. normal bzw. orthogonal zur Spannrichtung 33 des zweiten Spannmittels 17. Gemäß nicht beanspruchten Ausführungsformen ist bevorzugt vorgesehen, dass die Spannrichtung 33 gegenüber der Wirkrichtung 32 geneigt verläuft. Der Winkel zwischen Spannrichtung 33 und Wirkrichtung 32 kann gemäß einer nicht beanspruchten Ausführungsform beispielsweise zwischen 110° und 150°, bevorzugt zwischen 120° und 140° betragen.

Gemäß nicht beanspruchten Ausführungsformen ist bevorzugt vorgesehen, dass die zweite Nutflanke 10 gegenüber der Haupterstreckungsebene 5 geneigt, insbesondere um einen Nutflankenwinkel 34 von 30° bis 50° geneigt, verläuft.

Gemäß der vorliegenden, nicht beanspruchten Ausführungsform, insbesondere in nicht beanspruchten Ausführungsformen, kann auch das erste Spannmittel 16 schräg von der Spannleiste 12 durch die erste Nutflanke 9 in den Grundkörper 4 Richtung Haupterstreckungsebene 5 bzw. geneigt zur Haupterstreckungsebene 5 verlaufen. Durch die Konfiguration, bei der die Spannmittel 16, 17 von der Spannleiste 12 schräg Richtung Backfläche 6 verlaufen, wird die Spannleiste 12 mit ihrer Basisfläche 15 an den Nutgrund 11 gezogen.

In der vorliegenden Ausführungsform schließt die Spannleiste 12 im Wesentlichen fluchtend mit der Rückenfläche 7 ab. Dies ist vorteilhaft, wenn die Heizanordnung 28 eine induktive Heizanordnung ist. Dadurch, dass keine Elemente über die Rückenfläche 7 hinausragen, kann der Induktorspalt kleingehalten werden, wodurch die Effizienz der induktiven Beheizung verbessert ist. Bevorzugt schließt die Spannleiste 12 in jeder durch die Justieranordnung 20 eingestellten Stellung im Wesentlichen fluchtend mit der Rückenfläche 7 ab. Dies wird insbesondere durch die Führung der Spannleiste 12 an dem Nutgrund 11 erreicht.

Bevorzugt sind auch die Spannmittel 16, 17 unterhalb der Rückenfläche 7 und insbesondere in der Spannleiste 12 versenkt.

Bevorzugt sind in der Spannleiste 12 Durchgangslöcher mit einem gewissen Übermaß für die Spannmittel 16, 17 vorgesehen. Das Übermaß der Durchgangslöcher für die Spannmittel 16, 17 erlaubt eine Anpassbarkeit der Lage der Spannleiste 12 gegenüber der Spannnut 8, insbesondere in Querrichtung. Bevorzugt ist vorgesehen, dass durch die Spannmittel 16, 17 die beiden Nutflanken 9, 10 in Richtung oder an die Spannleiste 12 gezogen sind. Im Bereich der ersten Spannfläche 13 liegt die Spannleiste 12 im vorliegenden Fall über die Justieranordnung 20 an der ersten Nutflanke 9 an.

Im Bereich der zweiten Nutflanke 10 liegt die Spannleiste 12 über die Anschlagwulst 21 an der zweite Spannfläche 14 an.

In der vorliegenden Ausführungsform ist im Nutgrund 11 eine Biegenut 22 vorgesehen. Diese Biegenut 22 erstreckt sich von dem Nutgrund 11 weiter in den Grundkörper 4 hinein als die Spannnut 8. Durch Wahl der Form und der Dimension dieser Biegenut 22 kann das Biegeverhalten des Grundkörpers 4 und dadurch der Backplatte 1 beeinflusst werden.

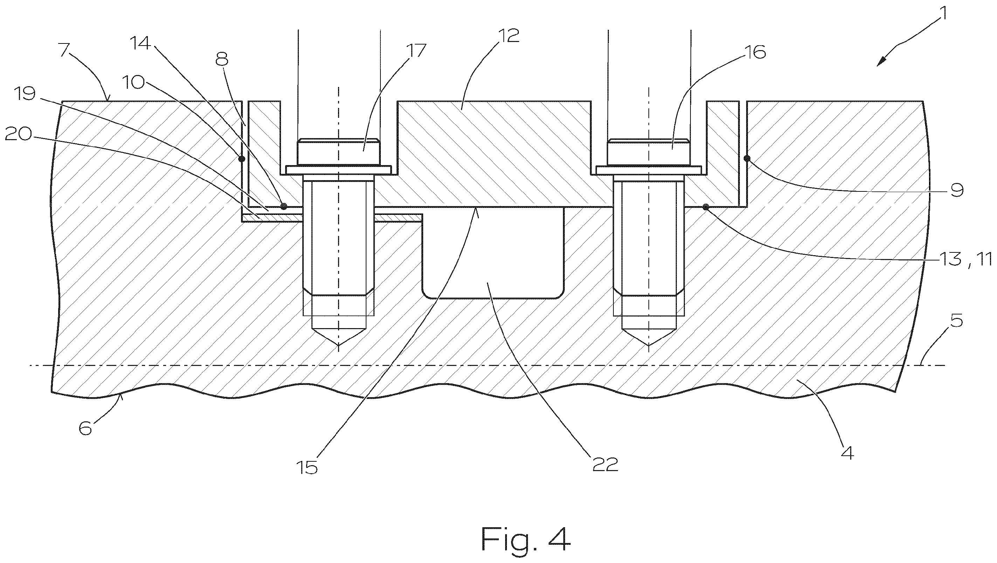

**Fig. 4** zeigt eine erfindungsgemäße Möglichkeit zum Vorspannen einer Backplatte 1. Es handelt sich um eine Backplatte 1, für eine Backplattenvorrichtung 2 eines Backofens 3 zum Herstellen von in einem Backvorgang unter Überdruck gebackenen knusprig-spröden Waffeln aus einer im unausgebackenen Zustand bevorzugt 45-70% Wasser enthaltenden Backmasse. Diese Backplatte 1 kann folglich ebenso in einer Backplattenvorrichtung gemäß Fig. 2 und in einem Backofen gemäß Fig. 1 eingesetzt werden.

Erfindungsgemäß ist vorgesehen, dass die Backplatte 1 einen plattenförmigen Grundkörper 4 umfasst, der einer Haupterstreckungsebene 5 folgt.

Erfindungsgemäß ist vorgesehen, dass der Grundkörper 4 eine außenliegende Backfläche 6 aufweist, die beim Backvorgang eine Seite einer Überdruckbackform bildet.

Erfindungsgemäß ist vorgesehen, dass der Grundkörper 4 an der der Backfläche 6 gegenüberliegenden Außenseite eine Rückenfläche 7 aufweist, über die beim Backvorgang ein Energieeintrag zur Beheizung der Backplatte 1 erfolgt.

Erfindungsgemäß ist vorgesehen, dass in der Rückenfläche 7 des Grundkörpers 4 eine Spannnut 8 mit einer ersten Nutflanke 9, einer zweiten Nutflanke 10 und einem Nutgrund 11 ausgenommen ist.

Zudem ist eine Spannleiste 12 vorgesehen, die in die Spannnut 8 und damit zwischen die Nutflanken 9, 10 eingesetzt ist.

Die Spannleiste 12 umfasst eine erste Spannfläche 13, eine zweite Spannfläche 14 und eine Basisfläche 15.

Erfindungsgemäß ist vorgesehen, dass mehrere ersten Spannmittel 16 und mehrere zweite Spannmittel 17 vorgesehen sind, die in eine gespannte Stellung bringbar sind und die insbesondere als Spannschrauben ausgestaltet sind.

In der Darstellung der Fig. 4 befinden sich die Spannschrauben in einer nicht gespannten Stellung, sodass auch die Backplatte 1 bzw. deren Grundkörper 4 noch nicht konvex vorgewölbt bzw. vorgespannt ist.

Erfindungsgemäß ist vorgesehen, dass die Spannmittel 16, 17 in ihrer gespannten Stellung an der Spannleiste 12 angreifen und ausgehend von der Spannleiste 12 durch den Nutgrund 11 in den Grundkörper 4 ragen und dort angreifen.

Erfindungsgemäß ist vorgesehen, dass die Spannmittel 16, 17 in ihrer gespannten Stellung eine Seite des Nutgrundes 11 Richtung oder an die Spannleiste 12 ziehen, dabei die Backfläche 6 des Grundkörpers 4 konvex vorwölben und die Backplatte 1 in einer gespannten Stellung halten.

Erfindungsgemäß sind die ersten und zweiten Spannmittel 16, 17 quer zum Längsverlauf 18 der Spannleiste 12 beabstandet voneinander angebracht. Sind die ersten Spannmittel 16 festgezogen, so wird dadurch die Spannleiste 12 in einem ersten Bereich Richtung oder an den Nutgrund 11 gezogen. Die Backplatte 1 ist derart ausgestaltet, dass in dieser Stellung, also wenn die zweiten Spannmittel 17 nicht gespannt sind, ein Spalt 19 zwischen der Spannleiste 12 und der Spannnut 8 freigehalten ist. Die Breite dieses Spaltes 19 kann durch eine Justieranordnung 20, insbesondere durch Einlegeplättchen, verändert bzw. angepasst werden. Durch Spannen des zweiten Spannmittels 17 wird der Spalt 19 durch ein Verbiegen des Grundkörpers 4 der Backplatte 1 geschlossen. Dadurch das Spannen der Spannmittel 16, 17 ist ein fester Verbund aus Grundkörper 4 und der Spannleiste 12 gebildet und der Grundkörper 4 der Backplatte 1 ist vorgespannt.

Bevorzugt ist vorgesehen, dass die Justieranordnung 20 eine Wahl des Grades der Vorspannung der Backplatte 1 durch die Spannmittel 16, 17 ermöglicht.

Bevorzugt ist vorgesehen, dass die Spannleiste 12 mit ihrer Basisfläche 15 am Nutgrund 11 anliegt, wenn sich das erste Spannmittel 16 in seiner gespannten Stellung befindet.

Es ist vorgesehen, dass die Spannleiste 12 mit ihrer Basisfläche 15 Richtung Nutgrund 11 gezogen wird, wenn das zweite Spannmittel 17 in seine gespannte Stellung gebracht wird. Zwischen der Spannleiste 12 im Bereich des zweiten Spannmittels 17 ist bevorzugt die Justieranordnung 20 angeordnet. Alternativ kann die Justieranordnung zwischen der Spannleiste 12 im Bereich des ersten Spannmittels 16 und dem Nutgrund angeordnet sein.

Bevorzugt ist vorgesehen, dass die ersten und zweiten Spannmittel 16, 17 im Wesentlichen orthogonal zur Haupterstreckungsebene 5 verlaufen. Insbesondere verlaufen die ersten und zweiten Spannmittel 16, 17 durch die Spannleiste 12 hindurch in den Grundkörper 4. Dabei greifen die Spannmittel 16, 17 einerseits an der Spannleiste 12 und andererseits im Grundkörper 4 an.

Bevorzugt ist vorgesehen, dass die Spannmittel 16, 17 in der Rückenfläche 7 versenkt sind. Insbesondere ist eine im Wesentlichen glatte Rückenfläche 7 vorgesehen, wenn die Backplatte 1 zum Einsatz mit einer Induktionsheizung eingerichtet ist. Bevorzugt schließt auch die Fläche der Spannleiste 12 im Wesentlichen fluchtend mit der Rückenfläche 7 des Grundkörpers 4 ab. Die Spannmittel 16, 17 können vorzugsweise als Spannschrauben ausgebildet sein, deren Schraubenköpfe an der Spannleiste abgestützt sind. Bevorzugt sind die Schraubenköpfe in der Spannleiste versenkt.

Bevorzugt ist vorgesehen, dass im Nutgrund 11 eine dem Längsverlauf 18 der Spannnut 8 folgende Biegenut 22 zur Herabsetzung der Biegesteifigkeit des Grundkörpers 4 ausgenommen ist.

Bevorzugt ist vorgesehen, dass die Biegenut 22 den Nutgrund 11 in zwei Abschnitte teilt, wobei die ersten Spannmittel 16 in den einen Abschnitt und die zweiten Spannmittel 17 in den anderen Abschnitt ragen.

## Patentansprüche

1. **Backplatte (1)**, für eine Backplattenvorrichtung (2) eines Backofens (3) zum Herstellen von in einem Backvorgang unter Überdruck gebackenen knusprig-spröden Waffeln,
- wobei die Backplatte (1) einen plattenförmigen Grundkörper (4) umfasst, der einer Haupterstreckungsebene (5) folgt,
- wobei der Grundkörper (4) eine außenliegende Backfläche (6) aufweist, die beim Backvorgang eine Seite einer Überdruckbackform bildet,
- wobei der Grundkörper (4) an der der Backfläche (6) gegenüberliegenden Außenseite eine Rückenfläche (7) aufweist, über die beim Backvorgang ein Energieeintrag zur Beheizung der Backplatte (1) erfolgt,
- wobei in der Rückenfläche (7) des Grundkörpers (4) eine Spannnut (8) mit einer ersten Nutflanke (9), einer zweiten Nutflanke (10) und einem Nutgrund (11) ausgenommen ist,
- wobei eine Spannleiste (12) vorgesehen ist, die in die Spannnut (8) und damit zwischen die Nutflanken (9, 10) eingesetzt ist,
- wobei die Spannleiste (12) eine erste Spannfläche (13), eine zweite Spannfläche (14) und eine Basisfläche (15) umfasst,
- wobei mehrere erste Spannmittel (16) und mehrere zweite Spannmittel (17) vorgesehen sind, die in eine gespannte Stellung bringbar sind und die insbesondere als Spannschrauben ausgestaltet sind,
**dadurch gekennzeichnet,**
- **dass** die Spannmittel (16, 17) in ihrer gespannten Stellung an der Spannleiste (12) angreifen und ausgehend von der Spannleiste (12) durch den Nutgrund (11) in den Grundkörper (4) ragen und dort angreifen,
- **dass** die ersten und zweiten Spannmittel (16, 17) quer zum Längsverlauf (18) der Spannleiste (12) beabstandet voneinander angebracht sind,
- **dass** die Spannleiste (12) in einem ersten Bereich Richtung oder an den Nutgrund (11) gezogen ist, wenn die ersten Spannmittel (16) festgezogen sind,
- **dass** ein Spalt (19) zwischen der Spannleiste (12) und der Spannnut (8) freigehalten ist, wenn die zweiten Spannmittel (17) nicht gespannt sind,
- **dass** die Spannleiste (12) mit ihrer Basisfläche (15) Richtung Nutgrund (11) gezogen wird, wenn das zweite Spannmittel (17) in seine gespannte Stellung gebracht wird
- **und dass** die Spannmittel (16, 17) in ihrer gespannten Stellung eine Seite des Nutgrundes (11) Richtung oder an die Spannleiste (12) ziehen, dabei die Backfläche (6) des Grundkörpers (4) konvex vorwölben und die Backplatte (1) in einer gespannten Stellung halten.

2. Backplatte (1) nach Anspruch 1, **dadurch gekennzeichnet,**
- **dass** die Spannleiste (12) mit ihrer Basisfläche (15) am Nutgrund (11) anliegt, wenn sich das erste Spannmittel (16) in seiner gespannten Stellung befindet.

3. Backplatte (1) nach einem der Ansprüche 1 oder 2, **dadurch gekennzeichnet,**
- **dass** die Breite des Spaltes (19) durch eine Justieranordnung (20), insbesondere durch Einlegeplättchen, verändert bzw. angepasst werden kann,
- **dass** der Spalt (19) durch ein Verbiegen des Grundkörpers (4) der Backplatte (1) geschlossen wird, wenn die zweiten Spannmittel (17) gespannt werden,
- **dass** durch das Spannen der Spannmittel (16, 17) ein fester Verbund aus Grundkörper (4) und der Spannleiste (12) gebildet und der Grundkörper (4) der Backplatte (1) vorgespannt ist
- und **dass** die Justieranordnung (20) eine Wahl des Grades der Vorspannung der Backplatte (1) durch die Spannmittel (16, 17) ermöglicht.

4. Backplatte (1) nach Anspruch 3, **dadurch gekennzeichnet, dass** die Justieranordnung (20) zwischen der Spannleiste (12) im Bereich des zweiten Spannmittels (17) angeordnet ist.

5. Backplatte (1) nach Anspruch 3, **dadurch gekennzeichnet, dass** die Justieranordnung (20) zwischen der Spannleiste (12) im Bereich des ersten Spannmittels (16) und dem Nutgrund (11) angeordnet ist.

6. Backplatte (1) nach einem der Ansprüche 1 bis 5, **dadurch gekennzeichnet, dass** die ersten und zweiten Spannmittel (16, 17) im Wesentlichen orthogonal zur Haupterstreckungsebene (5) verlaufen.

7. Backplatte (1) nach einem der Ansprüche 1 bis 6, **dadurch gekennzeichnet, dass** die ersten und zweiten Spannmittel (16, 17) durch die Spannleiste (12) hindurch in den Grundkörper (4) verlaufen, wobei die Spannmittel (16, 17) einerseits an der Spannleiste (12) und andererseits im Grundkörper (4) angreifen.

8. Backplatte (1) nach einem der Ansprüche 1 bis 7, **dadurch gekennzeichnet, dass** die Spannmittel (16, 17) in der Rückenfläche (7) versenkt sind.

9. Backplatte (1) nach einem der Ansprüche 1 bis 8, **dadurch gekennzeichnet, dass** eine im Wesentlichen glatte Rückenfläche (7) vorgesehen ist, wenn die Backplatte (1) zum Einsatz mit einer Induktionsheizung eingerichtet ist.

10. Backplatte (1) nach einem der Ansprüche 1 bis 9, **dadurch gekennzeichnet, dass** die Fläche der Spannleiste (12) im Wesentlichen fluchtend mit der Rückenfläche (7) des Grundkörpers (4) abschließt.

11. Backplatte (1) nach einem der Ansprüche 1 bis 10, **dadurch gekennzeichnet, dass** die Spannmittel (16, 17) als Spannschrauben ausgebildet sind, deren Schraubenköpfe an der Spannleiste (12) abgestützt sind, wobei die Schraubenköpfe insbesondere in der Spannleiste (12) versenkt sind.

12. Backplatte (1) nach einem der Ansprüche 1 bis 11, **dadurch gekennzeichnet, dass** im Nutgrund (11) eine dem Längsverlauf (18) der Spannnut (8) folgende Biegenut (22) zur Herabsetzung der Biegesteifigkeit des Grundkörpers (4) ausgenommen ist.

13. Backplatte (1) nach Anspruch 12, **dadurch gekennzeichnet, dass** die Biegenut (22) den Nutgrund (11) in zwei Abschnitte teilt, wobei die ersten Spannmittel (16) in den einen Abschnitt und die zweiten Spannmittel (17) in den anderen Abschnitt ragen.

## Claims

1. A **baking plate (1),** for a baking plate device (2) of a baking oven (3) for producing crispy-brittle wafers baked in a baking process under overpressure,
- wherein the baking plate (1) comprises a plate-shaped base body (4) following a main extension plane (5),
- wherein the base body (4) has an outer baking surface (6) that forms one side of an overpressure baking mould during the baking process,
- wherein the base body (4) has a back surface (7) on the outer side opposite the baking surface (6), via which an input of energy is supplied to heat the baking plate (1) during the baking process,
- wherein a tensioning groove (8) with a first groove flank (9), a second groove flank (10) and a groove base (11) is recessed in the back surface (7) of the base body (4),
- wherein a tensioning bar (12) is provided, which is inserted into the tensioning groove (8) and thus between the groove flanks (9, 10),
- wherein the tensioning bar (12) comprises a first tensioning surface (13), a second tensioning surface (14) and a base surface (15),
- wherein multiple first tensioning means (16) and multiple second tensioning means (17) are provided, which can be brought into a tensioned position and which are formed in particular as tensioning screws,
**characterised**
- **in that** the tensioning means (16, 17), in their tensioned position, engage on the tensioning bar (12) and, starting from the tensioning bar (12), project through the groove base (11) into the base body (4) and engage there,
- **in that** the first and second tensioning means (16, 17) are mounted at a distance from one another transverse to the longitudinal direction (18) of the tensioning bar (12),
- **in that** the tensioning bar (12) is pulled toward or against the groove base (11) in a first region when the first tensioning means (16) are tightened,
- **in that** a gap (19) between the tensioning bar (12) and the tensioning groove (8) is maintained when the second tensioning means (17) are not tensioned,
- **in that** the tensioning bar (12) is pulled with its base surface (15) toward the groove base (11) when the second tensioning means (17) is brought into its tensioned position,
- **and in that** the tensioning means (16, 17) in their tensioned position pull one side of the groove base (11) toward or against the tensioning bar (12), thereby causing the baking surface (6) of the base body (4) to bulge convexly and holding the baking plate (1) in a tensioned position.

2. The baking plate (1) according to claim 1, **characterised**
- **in that** the tensioning bar (12) rests with its base surface (15) against the groove base (11) when the first tensioning means (16) is in its tensioned position.

3. The baking plate (1) according to one of claims 1 or 2, **characterised**
- **in that** the width of the gap (19) can be changed or adjusted by means of an adjustment assembly (20), in particular by means of insertion plates,
- **in that** the gap (19) is closed by bending the base body (4) of the baking plate (1) when the second tensioning means (17) are tensioned,
- **in that** tensioning the tensioning means (16, 17) forms a fixed connection between the base body (4) and the tensioning bar (12), and the base body (4) of the baking plate (1) is pretensioned,
- and **in that** the adjustment assembly (20) enables the degree of pretensioning of the baking plate (1) by the tensioning means (16, 17) to be selected.

4. The baking plate (1) according to claim 3, **characterised in that** the adjustment assembly (20) is arranged between the tensioning bar (12) in the region of the second tensioning means (17).

5. The baking plate (1) according to claim 3, **characterised in that** the adjustment assembly (20) is arranged between the tensioning bar (12) in the region of the first tensioning means (16) and the groove base (11).

6. The baking plate (1) according to any one of claims 1 to 5, **characterised in that** the first and second tensioning means (16, 17) extend substantially orthogonal to the main extension plane (5).

7. The baking plate (1) according to any one of claims 1 to 6, **characterised in that** the first and second tensioning means (16, 17) extend through the tensioning bar (12) into the base body (4), wherein the tensioning means (16, 17) engage with the tensioning bar (12) on one side and with the base body (4) on the other side.

8. The baking plate (1) according to any one of claims 1 to 7, **characterised in that** the tensioning means (16, 17) are recessed into the back surface (7).

9. The baking plate (1) according to any one of claims 1 to 8, **characterised in that** a substantially smooth back surface (7) is provided when the baking plate (1) is configured for use with an induction heater.

10. The baking plate (1) according to any one of claims 1 to 9, **characterised in that** the surface of the tensioning bar (12) is substantially flush with the back surface (7) of the base body (4).

11. The baking plate (1) according to any one of claims 1 to 10, **characterised in that** the tensioning means (16, 17) are formed as tensioning screws whose screw heads are supported on the tensioning bar (12), wherein the screw heads are, in particular, countersunk into the tensioning bar (12).

12. The baking plate (1) according to any one of claims 1 to 11, **characterised in that** a bending groove (22), which follows the longitudinal direction (18) of the tensioning groove (8), is recessed in the groove base (11) to reduce the bending stiffness of the base body (4).

13. The baking plate (1) according to claim 12, **characterised in that** the bending groove (22) divides the groove base (11) into two portions, with the first tensioning means (16) extending into one portion and the second tensioning means (17) extending into the other portion.

## Revendications

1. Une **plaque de cuisson (1)** pour un dispositif de plaques de cuisson (2) d'un four de cuisson (3) pour la fabrication de gaufrettes croustillantes et friables cuites en surpression dans un processus de cuisson,
- dans laquelle la plaque de cuisson (1) comprend un corps de base (4) en forme de plaque qui suit un plan d'extension principal (5),
- dans laquelle le corps de base (4) présente une surface de cuisson externe (6) qui, lors du processus de cuisson, forme l'un des côtés d'un moule de cuisson à surpression,
- dans laquelle le corps de base (4) présente, sur le côté extérieur opposé à la surface de cuisson (6), une surface arrière (7) par laquelle s'effectue, lors du processus de cuisson, un apport d'énergie pour chauffer la plaque de cuisson (1),
- dans laquelle une rainure de serrage (8) avec un premier flanc de rainure (9), un deuxième flanc de rainure (10) et un fond de rainure (11) est ménagée dans la surface arrière (7) du corps de base (4),
- dans laquelle une barre de serrage (12) est prévue, qui est insérée dans la rainure de serrage (8) et donc entre les flancs de rainure (9, 10),
- dans laquelle la barre de serrage (12) présente une première surface de serrage (13), une deuxième surface de serrage (14) et une surface de base (15),
- dans laquelle plusieurs premiers moyens de serrage (16) et plusieurs deuxièmes moyens de serrage (17) sont prévus, qui peuvent être amenés dans une position serrée et qui sont en particulier conçus comme des vis de serrage,
**caractérisée**
- **en ce que** les moyens de serrage (16, 17), dans leur position serrée, agissent sur la barre de serrage (12) et, partant de la barre de serrage (12), font saillie à travers le fond de rainure (11) dans le corps de base (4) et s'y engagent,
- **en ce que** les premier et deuxième moyens de serrage (16, 17) sont disposés à distance l'un de l'autre, transversalement à la direction longitudinale (18) de la barre de serrage (12),
- **en ce que** la barre de serrage (12) est tirée, dans une première région, vers le fond de rainure (11) lorsque les premiers moyens de serrage (16) sont tendus,
- **en ce qu'**un jeu (19) est maintenu entre la barre de serrage (12) et la rainure de serrage (8) lorsque les seconds moyens de serrage (17) ne sont pas serrés,
- **en ce que** la barre de serrage (12), avec sa surface de base (15), est tirée vers le fond de rainure (11) lorsque le deuxième moyen de serrage (17) est amené dans sa position serrée,
- **et en ce que** les moyens de serrage (16, 17), lorsqu'ils sont en position de serrage, tirent un côté du fond de rainure (11) vers la barre de serrage (12), ce qui provoque un bombement convexe de la surface de cuisson (6) du corps de base (4) et maintient la plaque de cuisson (1) en position serrée.

2. La plaque de cuisson (1) selon la revendication 1, **caractérisée**
- **en ce que** la barre de serrage (12) avec sa surface de base (15) repose contre le fond de rainure (11) lorsque le premier moyen de serrage (16) se trouve dans sa position serrée.

3. La plaque de cuisson (1) selon l'une des revendications 1 ou 2, **caractérisée**
- **en ce que** la largeur du jeu (19) peut être modifiée ou ajustée par un arrangement d'ajustement (20), en particulier par des plaquettes d'insertion,
- **en ce que** le jeu (19) est fermé par une flexion du corps de base (4) de la plaque de cuisson (1) lorsque les seconds moyens de serrage (17) sont serrés,
- **en ce que** le serrage des moyens de serrage (16, 17) permet de former un lien solide entre le corps de base (4) et la barre de serrage (12), et que le corps de base (4) de la plaque de cuisson (1) est préserré,
- et **en ce que** l'arrangement d'ajustement (20) permet une sélection du degré de précontrainte de la plaque de cuisson (1) par les moyens de serrage (16, 17).

4. La plaque de cuisson (1) selon la revendication 3, **caractérisée en ce que** l'arrangement d'ajustement (20) est disposé entre la barre de serrage (12) dans la région du deuxième moyen de serrage (17).

5. La plaque de cuisson (1) selon la revendication 3, **caractérisée en ce que** l'arrangement d'ajustement (20) est disposé entre la barre de serrage (12), dans la région du premier moyen de serrage (16), et le fond de rainure (11).

6. La plaque de cuisson (1) selon l'une des revendications 1 à 5, **caractérisée en ce que** les premier et deuxième moyens de serrage (16, 17) s'étendent sensiblement orthogonalement au plan d'extension principal (5).

7. La plaque de cuisson (1) selon l'une des revendications 1 à 6, **caractérisée en ce que** les premier et deuxième moyens de serrage (16, 17) traversent la barre de serrage (12) pour entrer dans le corps de base (4), les moyens de serrage (16, 17) s'engageant d'une part sur la barre de serrage (12) et d'autre part dans le corps de base (4).

8. La plaque de cuisson (1) selon l'une des revendications 1 à 7, **caractérisée en ce que** les moyens de serrage (16, 17) sont noyés dans la face arrière (7).

9. La plaque de cuisson (1) selon l'une des revendications 1 à 8, **caractérisée en ce qu'**une surface arrière (7) essentiellement lisse est prévue lorsque la plaque de cuisson (1) est conçue pour être utilisée avec un système de chauffage par induction.

10. La plaque de cuisson (1) selon l'une des revendications 1 à 9, **caractérisée en ce que** la surface de la barre de serrage (12) est sensiblement affleurante avec la face arrière (7) du corps de base (4).

11. La plaque de cuisson (1) selon l'une des revendications 1 à 10, **caractérisée en ce que** les moyens de serrage (16, 17) sont réalisés sous forme de vis de serrage dont les têtes de vis sont appuyées sur la barre de serrage (12), les têtes de vis étant en particulier noyées dans la barre de serrage (12).

12. La plaque de cuisson (1) selon l'une des revendications 1 à 11, **caractérisée en ce qu'**une rainure de flexion (22) suivant le tracé longitudinal (18) de la rainure de serrage (8) est ménagée dans le fond de rainure (11) pour réduire la rigidité à la flexion du corps de base (4).

13. La plaque de cuisson (1) selon la revendication 12, **caractérisée en ce que** la rainure de flexion (22) divise le fond de rainure (11) en deux portions, les premiers moyens de serrage (16) faisant saillie dans l'une des portions et les seconds moyens de serrage (17) faisant saillie dans l'autre portion.
